# FASCICULE DE BREVET EUROPEEN

(11) **EP 1 002 706 B1**
(45) Date de publication et mention de la délivrance du brevet: **06.05.2004**
(21) Numéro de dépôt: 99402901.5
(22) Date de dépôt: 22.11.1999
(51) Int. Cl.: B60R 25/04, B60K 28/10

(54) **Circuit de commande de démarrage d'un moteur d'un véhicule automobile**
Anlassersteuerung für die Brennkraftmaschine eines Fahrzeugs
Engine starter enable control in a motor vehicle

(30) Priorité: 20.11.1998 FR 9814621
(43) Date de publication de la demande: 24.05.2000
(73) Titulaire: Renault s.a.s., 92100 Boulogne Billancourt (FR)
(72) Inventeur: Lauter, Jacques, 78550 Dannemarie (FR); Rousseau, Marc, 28260 Rouvres (FR)

(56) Documents cités:
- EP-A- 0 265 306
- EP-A- 0 595 712
- EP-A- 0 681 951
- DE-C- 4 402 197
- US-A- 5 180 924
- US-A- 5 670 831

## Description

L'invention concerne un circuit de commande de démarrage d'un moteur d'un véhicule automobile.

Par la publication EP0265306, on connaît un Circuit de commande de démarrage d'un moteur d'un véhicule automobile qui est couplé par des moyens d'embrayage à une transmission du véhicule, comportant :
- des moyens d'identification qui sont susceptibles d'émettre une consigne d'autorisation de démarrage,
- un capteur de la position de moyens d'embrayage de la transmission du véhicule qui émet une consigne d'autorisation de démarrage à l'intention de l'unité centrale pour permettre le démarrage du moteur seulement lorsque la transmission n'est pas accouplée au moteur,
- une unité centrale susceptibie de recevoir du circuit de commande au moins une consigne d'autorisation de démarrage et un signal de commande de démarrage, et
- un commutateur (28) qui est susceptible d'émettre le signal de commande de démarrage à l'intention de l'unité centrale lorsqu'il est actionné.

La publication US 5180924 propose que le levier de changement de vitesse actionne un interrupteur interdisant le démarrage du moteur lorsqu'un rapport est engagé.

Le circuit de commande décrit dans cette publication comporte trois interrupteurs en parallèle susceptibles d'alimenter respectivement par l'intermédiaire d'une ligne associée un circuit d'accessoires du véhicule, un circuit d'allumage du véhicule et un contact d'un relais d'un solénoïde d'un démarreur du véhicule. Un interrupteur, monté électriquement en série avec le solénoïde du démarreur est susceptible de n'autoriser le démarrage du véhicule que lorsque la pédale d'embrayage est complètement sollicitée.

Ce circuit, entièrement électrique est incompatible avec les technologies actuelles dans laquelle une unité centrale régit l'ensemble du fonctionnement du véhicule et en particulier du véhicule. Ce circuit présente de surcroît l'inconvénient de comporter de nombreux câblages et organes électriques pouvant être soumis à des défaillance.

Pour remédier à ces inconvénients, l'invention propose un circuit de commande comportant une unité centrale de commande actionnée par un capteur simple et peu coûteux.

Ce circuit comprend :
- des moyens d'identification susceptibles d'émettre une première consigne d'autorisation de démarrage,
- un capteur de la position de moyens d'embrayage de la transmission du véhicule qui émet une deuxième consigne d'autorisation de démarrage à l'intention de l'unité centrale pour permettre le démarrage du moteur seulement lorsque la transmission n'est pas accouplée au moteur,
- une unité centrale susceptible de recevoir du circuit de commande au moins une consigne d'autorisation de démarrage et un signal de commande de démarrage, qui commande le démarrage du moteur du véhicule uniquement si elle a reçu d'abord toutes les consignes d'autorisation de démarrage et si elle reçoit ensuite le signal de commande de démarrage, et
- un commutateur est susceptible d'émettre le signal de commande de démarrage à l'intention de l'unité centrale lorsqu'il est actionné.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective de l'avant d'un habitacle d'un véhicule comportant un circuit de commande de démarrage selon l'invention ; et
- la figure 2 est un organigramme du fonctionnement d'un circuit de commande de démarrage selon l'invention lors du démarrage d'un véhicule ;

Dans la description qui va suivre, des chiffres de référence identiques désignent des pièces identiques ou ayant des fonctions similaires.

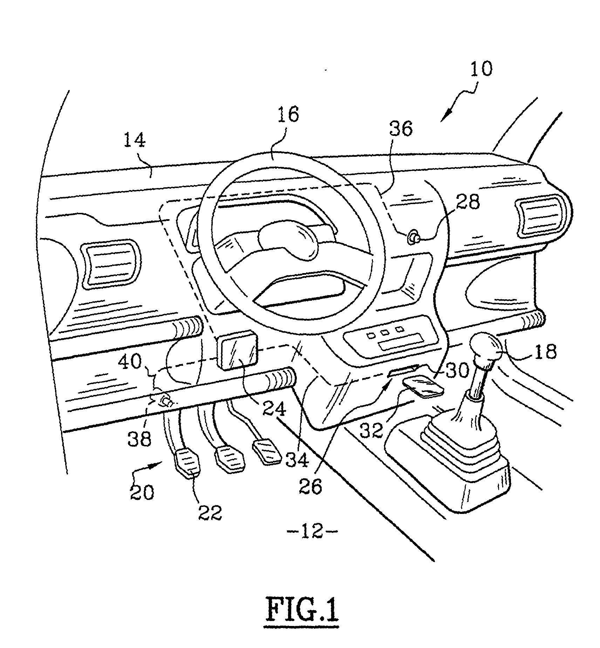

On a représenté à la figure 1 l'avant d'un habitacle 10 de véhicule automobile comportant un circuit de commande de commande de démarrage réalisé conformément à l'invention.

De manière connue, un tel habitacle 10 comporte un poste de conduite 12 qui comporte une planche de bord 14, un volant 16 qui est agencé devant la planche de bord 14, un levier 18 de commande des rapports de transmission, et un pédalier 20 qui est disposé sous la planche de bord 14.

Dans le mode de réalisation préféré de l'invention, et de façon non limitative de l'invention, le véhicule automobile est un véhicule qui est équipé d'une boîte de vitesses mécanique, et le pédalier comporte au moins une pédale 22 de commande mécanique ou hydraulique d'un embrayage à friction interposé entre la boîte de vitesses et le moteur du véhicule.

De manière connue, le véhicule comporte un circuit de commande de démarrage qui comporte une unité centrale 24, des moyens 26 d'identification, et un commutateur 28.

Dans le mode de réalisation préféré de l'invention, les moyens 26 d'identification sont réalisés sous la forme d'un lecteur de badge 30 qui est susceptible d'identifier un badge conforme 32, notamment un badge magnétique. Lorsque le badge conforme 32 est introduit dans le fente correspondante du lecteur de badge 30, le lecteur de badge 30 est susceptible d'émettre, par l'intermédiaire d'une première liaison électrique 34, une première consigne d'autorisation de démarrage à destination de l'unité centrale 24 à laquelle il est relié.

Cette disposition n'est pas limitative de l'invention, et en variante, les moyens d'identification pourraient être constitués d'un verrou mécanique agencé à l'intérieur d'un commutateur d'un antivol conventionnel de colonne de direction (non représenté).

Dans ce cas l'antivol pourrait intégrer aussi un commutateur réalisé sous la forme d'un commutateur conventionnel rotatif à rappel élastique.

Le commutateur 28 illustré à la figure 1 est un bouton poussoir qui est agencé de préférence sur la planche de bord 14 à proximité du poste de conduite de façon que, lorsque le conducteur du véhicule a introduit son badge 32 dans le lecteur 30, une impulsion sur le bouton poussoir 28 permette le démarrage du moteur du véhicule. Le bouton poussoir 28 est relié à l'unité centrale 24 par l'intermédiaire d'une deuxième liaison électrique 36.

Lorsque le bouton poussoir 28 est actionné, il émet un signal de commande de démarrage du moteur à destination de l'unité centrale 24. Un simple impulsion est suffisante et l'actionnement du bouton poussoir 28 ne nécessite pas un maintien de la pression du doigt de l'utilisateur car l'unité centrale 24 assure elle-même la gestion complète du démarrage du moteur.

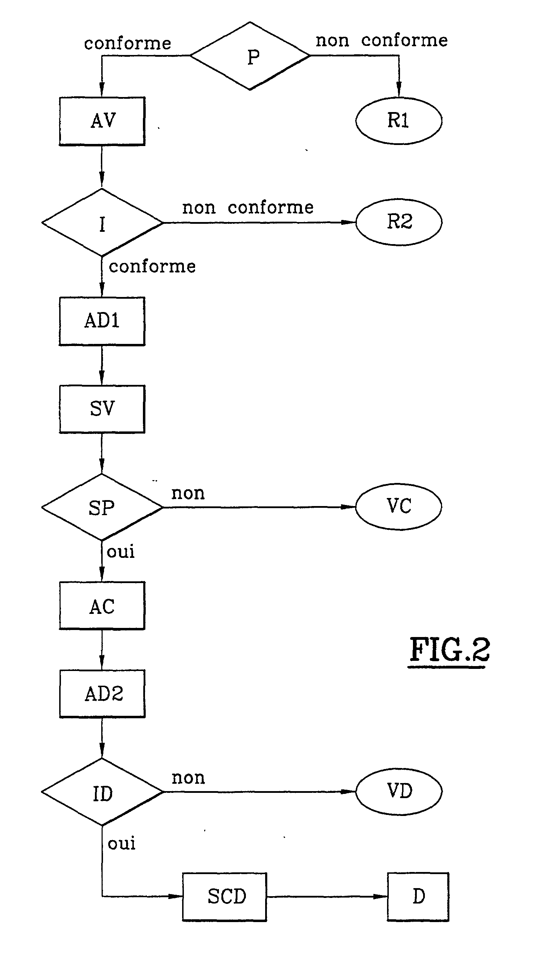

Toutefois, comme on le verra décrit ultérieurement en référence à la figure 2, ce signal n'est efficace et ne provoque le démarrage du moteur que lorsque l'unité centrale 24 de commande a reçu toutes les consignes d'autorisation de démarrage.

En effet, conformément à l'invention, le circuit de commande de démarrage selon l'invention comporte un capteur 38 de la position des moyens d'embrayage de la transmission du véhicule qui, dans le mode de réalisation préféré de l'invention, est réalisé sous la forme d'un contacteur 38 qui est associé à la position de la pédale d'embrayage 20, et qui est relié à l'unité centrale 24 par l'intermédiaire d'une troisième liaison électrique 40.

Dans le cas d'un véhicule équipé d'une boîte automatique, le capteur 38 sera préférentiellement associé à la position d'une pédale de frein. En effet, lorsque la pédale de frein d'un véhicule équipé d'une boîte automatique est actionnée, le convertisseur de couple de la boîte qui est interposé entre le moteur du véhicule et la transmission n'accouple pas le moteur à la transmission. L'actionnement de la pédale de frein d'un véhicule équipé d'une boîte automatique est alors sensiblement équivalent à l'actionnement d'une pédale d'embrayage d'un véhicule équipé d'une boîte manuelle.

Lorsque l'action sur la pédale d'embrayage est relâchée, le contacteur 38 n'émet aucune consigne d'autorisation de démarrage en direction de l'unité centrale 24 de commande.

En revanche, lorsque la pédale 20 est sollicitée, ce qui correspond à l'actionnement de l'embrayage du véhicule, le contacteur 38 émet à l'intention de l'unité centrale 24 de commande une deuxième consigne d'autorisation de démarrage.

Comme l'illustre la figure 2, le conducteur doit, à partir du moment où il se présente à proximité du véhicule, tout d'abord présenter son badge 32 qui est identifié au cours d'une première étape P de reconnaissance du badge 32 par l'unité centrale 24 et par des capteurs extérieurs au véhicule (non représentés). Si le badge 32 est défectueux, ou s'il s'agit d'un badge non conforme, l'unité centrale 24 se place dans un premier mode de rejet R1 qui interdit l'accès au véhicule.

Si le badge 32 est reconnu, l'unité centrale 24 se place dans un premier mode d'accès véhicule AV qui autorise l'accès au véhicule.

Puis, pour démarrer le moteur, le conducteur introduit le badge 32 dans le lecteur de badge 30 au cours d'une étape I d'introduction I du badge. Si le badge 32 est défectueux, ou s'il s'agit d'un badge non conforme, l'unité centrale 24 se place dans un deuxième mode de rejet R2 qui interdit le démarrage du moteur. Si le badge 32 est reconnu, le lecteur de badge 30 délivre à l'unité centrale 24 une première consigne AD1 d'autorisation de démarrage qui autorise la suite des opérations de démarrage, et provoque une étape SV de sortie du mode de veille de l'unité centrale 24. L'unité centrale est alors susceptible de commander les autres étapes du démarrage du moteur du véhicule.

On remarquera, que dans le cas d'un véhicule équipé d'un antivol conventionnel, un première consigne AD1 similaire d'autorisation de démarrage peut être délivrée à l'unité centrale 24 lors de l'introduction de la clé dans le verrou.

Puis le conducteur doit solliciter, en l'enfonçant, la pédale 20 de l'embrayage du véhicule au cours d'une étape SP de sollicitation de la pédale 20. Si la pédale n'est pas sollicitée, l'unité centrale 24 reste dans un mode VC de veille contacteur jusqu'à ce que la pédale 20 soit sollicitée.

Si, au contraire la pédale 20 est sollicitée, le commutateur 38 est alors actionné au cours d'une étape AC d'actionnement du contacteur 38, et il émet alors une deuxième consigne AD2 d'autorisation de démarrage à l'intention de l'unité centrale 24.

Le conducteur doit alors, pour démarrer le moteur, actionner le bouton poussoir 28 au cours d'une étape ID d'impulsion de démarrage. Si le bouton poussoir 28 n'est pas actionné, l'unité centrale 24 reste dans un mode de veille démarrage VD jusqu'à ce que le bouton poussoir 28 soit actionné.

Si, au contraire, le bouton poussoir 28 est actionné, il émet un signal de commande de démarrage SCD en direction de l'unité centrale 24 qui provoque le démarrage D du moteur du véhicule.

On remarquera que, dans le cas d'un véhicule équipé d'un antivol conventionnel, un signal similaire de commande de démarrage SCD peut être délivrée à l'unité centrale 24 en actionnant un contacteur interne de l'antivol en faisant tourner le rotor du verrou de l'antivol avec la clé.

Le circuit de commande de démarrage selon l'invention permet avantageusement d'éviter un déplacement brusque et inopiné du véhicule lors du démarrage de son moteur.

## Revendications

1. Circuit de commande de démarrage d'un moteur d'un véhicule automobile qui est couplé par des moyens d'embrayage à une transmission du véhicule, comportant :
- des moyens d'identification (30,32) qui sont susceptibles d'émettre une première consigne (AD1) d'autorisation de démarrage,
- un capteur (38) de la position de moyens d'embrayage de la transmission du véhicule qui émet une deuxième consigne (AD2) d'autorisation de démarrage à l'intention de l'unité centrale (24) pour permettre le démarrage (D) du moteur seulement lorsque la transmission n'est pas accouplée au moteur,
- une unité centrale (24) susceptible de recevoir du circuit de commande au moins une consigne (AD1, AD2) d'autorisation de démarrage et un signal (SCD) de commande de démarrage, qui commande le démarrage (D) du moteur du véhicule uniquement si elle a reçu d'abord toutes les consignes (AD1, AD2) d'autorisation de démarrage et si elle reçoit ensuite le signal (SCD) de commande de démarrage, et
- un commutateur (28) qui est susceptible d'émettre le signal (SCD) de commande de démarrage à l'intention de l'unité centrale (24) lorsqu'il est actionné.

2. Circuit de commande selon la revendication 1, **caractérisé en ce que** le capteur (38) est un capteur de la position d'une pédale (20) du véhicule, qui émet la deuxième consigne (AD2) d'autorisation de démarrage lorsque la pédale (20) est actionnée.

3. Circuit de commande selon la revendication 2, **caractérisé en ce que** le capteur (38) de position est associé à une pédale (20) d'un embrayage associé à une boîte de vitesses mécanique de la transmission.

4. Circuit de commande selon la revendication 2, **caractérisé en ce que** le capteur (38) de position est associé à une pédale de frein d'un véhicule équipé d'une boîte de vitesses automatique, dont un convertisseur de couple forme les moyens d'embrayage de la transmission.

5. Circuit de commande selon l'une des revendications précédentes, **caractérisé en ce que** les moyens d'identification (30, 32) comportent un lecteur (30) d'un badge d'identification (32) qui émet la première consigne (AD1) d'autorisation de démarrage lorsqu'un badge conforme (30) y est introduit.

6. Circuit de commande selon l'une des revendications précédentes, **caractérisé en ce que** le commutateur (38) est un bouton poussoir ou un commutateur rotatif à rappel élastique qui émet le signal (SCD) de commande sous la forme d'une impulsion lorsqu'il est actionné.

7. Circuit de commande selon l'une des revendications précédentes, **caractérisé en ce que** les moyens d'identification comportent un antivol à clé qui émet la première consigne (AD1) d'autorisation de démarrage lorsqu'une clé conforme y est introduite.

8. Circuit de commande selon la revendication 7, **caractérisé en ce que** le commutateur (38) émet le signal de commande (SCD) lorsque la clé est tournée dans l'antivol.

9. Circuit de commande selon l'une des revendications précédentes, **caractérisé en ce que** l'unité centrale (24) est en mode de veille tant qu'elle ne reçoit pas la première consigne (AD1) d'autorisation de démarrage.

## Patentansprüche

1. Anlasssteuerschaltung eines Motors eines automobilen Fahrzeugs, welcher mit Kupplungsmitteln mit einem Getriebe des Fahrzeugs gekoppelt ist, aufweisend:
- Identifikationsmittel (30, 32), welche geeignet sind auszusenden eine erste Anweisung (AD 1) zur Anlassautorisierung,
- einen Sensor (38) der Position der Kupplungsmittel des Getriebes des Fahrzeugs, welcher aussendet eine zweite Anweisung (AD2) zur Anlassautorisierung, gerichtet an die Zentraleinheit (24), um das Anlassen (D) des Motors nur dann zu erlauben, wenn das Getriebe nicht an den Motor gekoppelt ist,
- eine Zentraleinheit (24), dazu geeignet, von der Steuerschaltung zu erhalten wenigstens eine Anweisung (AD1, AD2) zur Anlassautorisierung und ein Signal (SCD) zur Anlasssteuerung, welche das Anlassen (D) des Motors nur dann steuert, wenn sie vorher alle die Anweisungen (AD1, AD2) zur Anlassautorisierung erhalten hat und sie danach das Signal (SCD) zur Anlasssteuerung erhält, und
- einen Schalter (28), welcher geeignet ist, das Signal (SCD) zur Anlasssteuerung auszusenden, gerichtet an die Zentraleinheit (24), worauf es ausgeführt wird.

2. Steuerschaltung gemäß Anspruch 1, **dadurch gekennzeichnet, dass** der Sensor (38) ein Sensor der Position eines Pedals (20) des Fahrzeugs ist, welcher die zweite Anweisung (AD2) zur Anlassautorisierung aussendet, wenn das Pedal (20) betätigt ist.

3. Steuerschaltung gemäß Anspruch 2, **dadurch gekennzeichnet, dass** der Sensor (38) der Position zugeordnet ist einem Pedal (20) einer Kupplung, welche zugeordnet ist einem mechanischen Schaltgetriebe des Getriebes.

4. Steuerschaltung gemäß Anspruch 2, **dadurch gekennzeichnet, dass** der Sensor (38) der Position zugeordnet ist einem Bremspedal eines Fahrzeugs, welches ausgerüstet ist mit einem automatischen Getriebe, in dem ein Drehmomentwandler die Kupplungsmittel des Getriebes formt.

5. Steuerschaltung gemäß einem der vorangegangenen Ansprüche, **dadurch gekennzeichnet, dass** die Identifikationsmittel (30, 32) aufweisen einen Leser (30) eines Identifikationsausweises (32), welcher aussendet die erste Anweisung (AD1) zur Anlassautorisierung, wenn ein entsprechender Ausweis (30) dort eingeführt ist.

6. Steuerschaltung gemäß einem der vorangegangenen Ansprüche, **dadurch gekennzeichnet, dass** der Schalter (38) ein Druckknopf oder ein rotatorischer Schalter mit elastischer Rückführung ist, welcher aussendet das Signal (SCD) zur Steuerung in Form eines Impulses, wenn er betätigt wird.

7. Steuerschaltung gemäß einem der vorangegangenen Ansprüche, **dadurch gekennzeichnet, dass** die Identifikationsmittel aufweisen ein Schlüsselschloss, welches aussendet die erste Anweisung (AD1) zur Anlassautorisierung, wenn ein entsprechender Schlüssel dort eingeführt ist.

8. Steuerschaltung gemäß Anspruch 7, **dadurch gekennzeichnet, dass** der Schalter (38) das Steuersignal (SCD) aussendet, wenn der Schlüssel in dem Schloss gedreht wird.

9. Steuerschaltung gemäß einem der vorangegangenen Ansprüche, **dadurch gekennzeichnet, dass** die Zentraleinheit (24) in einem Wachmodus ist, solange sie nicht die erste Anweisung (AD1) der Anlassautorisierung erhält.

## Claims

1. A circuit for controlling starting of an engine of a motor vehicle, which is coupled by clutch means to a transmission of the vehicle, comprising:
- identification means (30, 32) capable of emitting a first starting authorisation command (AD1),
- a sensor (38) for the position of clutch means of the transmission of the vehicle, which emits a second starting authorisation command (AD2) for the central unit (24) to permit starting (D) of the engine only when the transmission is not coupled to the engine,
- a central unit (24) capable of receiving from the control circuit at least one starting authorisation command (AD1, AD2) and a starting control signal (SCD), and which controls starting (D) of the engine of the vehicle only if it has first received all the starting authorisation commands (AD1, AD2) and if it then receives the starting control signal (SCD), and
- a change-over switch (28) which is capable of emitting the starting control signal (SCD) for the central unit (24) when the switch is actuated.

2. A control circuit according to claim 1 **characterised in that** the sensor (38) is a sensor for sensing the position of a pedal (20) of the vehicle, which emits the second starting authorisation command (AD2) when the pedal (20) is actuated.

3. A control circuit according to claim 2 **characterised in that** the position sensor (38) is associated with a pedal (20) of a clutch associated with a mechanical gearbox of the transmission.

4. A control circuit according to claim 2 **characterised in that** the position sensor (38) is associated with a brake pedal of a vehicle fitted with an automatic gearbox of which a torque converter forms the clutch means of the transmission.

5. A control circuit according to one of the preceding claims **characterised in that** the identification means (30, 32) comprise a reader (30) for an identification key card (32), which emits the first starting authorisation command (AD1) when a conforming key card (30) is introduced therein.

6. A control circuit according to one of the preceding claims **characterised in that** the change-over switch (38) is a pushbutton or a rotary switch with resilient return, which emits the control signal (SCD) in the form of a pulse when it is actuated.

7. A control circuit according to one of the preceding claims **characterised in that** the identification means comprise a key-operated anti-theft device which emits the first starting authorisation command (AD1) when a conforming key is introduced therein.

8. A control circuit according to claim 7 **characterised in that** the switch (38) emits the control signal (SCD) when the key is turned in the anti-theft device.

9. A control circuit according to one of the preceding claims **characterised in that** the central unit (24) is in a standby mode as long as it does not receive the first starting authorisation command (AD1).
